# EUROPÄISCHE PATENTSCHRIFT

(11) **EP 4 370 716 B1**
(45) Veröffentlichungstag und Bekanntmachung des Hinweises auf die Patenterteilung: **14.05.2025**
(21) Anmeldenummer: 22734983.4
(22) Anmeldetag: 24.06.2022
(51) Int. Cl.: C14B 7/04, B32B 9/02, C08H 1/06, D04H 1/30, D04H 1/58, D04H 1/62, E04C 2/10

(54) **DÄMMMATERIAL UND DESSEN HERSTELLUNG**
INSULATING MATERIAL AND PRODUCTION THEREOF
MATÉRIAU ISOLANT ET SA PRODUCTION

(30) Priorität: 14.07.2021 DE 102021118260
(43) Veröffentlichungstag der Anmeldung: 22.05.2024
(73) Patentinhaber: Bader GmbH & Co. KG, 73033 Göppingen (DE)
(72) Erfinder: HELFERSDORFER, Kai, 73107 Eschenbach (DE); VIDENSEK, Sascha, 73066 Uhingen (DE)
(74) Vertreter: Pfiz/Gauss Patentanwälte PartmbB
(86) Internationale Anmeldenummer: PCT/EP2022/067402
(87) Internationale Veröffentlichungsnummer: WO 2023/285111

(56) Entgegenhaltungen:
- EP-A2- 0 089 029
- EP-B1- 2 853 648
- RU-C1- 2 098 373

## Beschreibung

Die Erfindung betrifft ein Dämmmaterial insbesondere zur Schall- und/oder Wärmedämmung und ein Herstellungsverfahren für ein solches Dämmmaterial.

Dämmmaterialien aus natürlichem Material, wie beispielsweise Stroh, Flachs, Hanf oder Seegras, werden aufgrund guter Ökobilanz immer öfters zur Schall- und/oder Wärmedämmung verwendet.

Leder ist ein natürliches Material und wird beispielsweise in der Automobilindustrie als Bezug von Autositzen eingesetzt. Allerdings werden bei der industriellen Lederherstellung und -verarbeitung Lederstücke häufig nicht vollständig genutzt, so dass Lederreste entstehen. Insbesondere beim Falzen oder Stanzen eines Lederstücks entstehen Lederreste in Form von Falzspänen, Stanzgittern oder Stanzresten, die beispielsweise aufgrund eines optischen Mangels nicht weiterverarbeitet werden. Obwohl die Lederreste die gleichen hervorragenden natürlichen Eigenschaften aufweisen, finden diese in der herkömmlichen Produktion oft keine Verwendung mehr und werden als Abfall auf Deponien entsorgt. Dabei sind die Verwertungs- und Entsorgungswege ungewiss und mit Kosten verbunden.

Die DE 103 20 061 A1 beschreibt die Herstellung eines nicht klebrigen, verrottungsfesten Werkstoffs unter Verwendung von Lederabfällen. Hierzu werden die Lederabfälle gemahlen und mit einem kollagenhaltigen Mittel und/oder die Verrottung verhindernden Mittel vermischt. Diese Mischung wird unter Druckeinwirkung und bei erhöhter Temperatur zu einer thermoplastisch verformbaren Masse umgeformt. Diese Masse kann zu einem Halbzeug weiterverarbeitet oder durch Einpressen in ein entsprechendes Formwerkzeug zu einem dreidimensionalen Formteil geformt werden. Dabei sind die gemahlenen Ein Dämmmaterial gemäß dem Oberbegriff des Anspruchs 1 ist aus EP2853648 B1 schon bekannt.

Ein Verfahren zur Herstellung eines Dämmmaterials umfassend eine Vielzahl von Lederfasern ist aus EP0089029 A2 schon bekannt.

Lederabfälle vollständig in das kollagenhaltige Mittel und/oder die Verrottung verhindernde Mittel eingebettet.

Die Aufgabe der vorliegenden Erfindung besteht darin, die bei der Lederherstellung und -verarbeitung anfallenden Lederreste weiter zu nutzen und Kosten für deren Entsorgung zu vermeiden.

Die Erfindung löst diese Aufgabe durch die in den unabhängigen Patentansprüchen angegebenen Merkmalskombinationen. Vorteilhafte Ausgestaltungen und Weiterbildungen der Erfindung ergeben sich aus den abhängigen Ansprüchen.

Ein erfindungsgemäßes Dämmmaterial, insbesondere zur Schall- und/oder Wärmedämmung, umfasst eine Vielzahl von Lederfasern, vorzugsweise aus Fertigleder. Jede Lederfaser weist einen Verbindungsbereich und einen Freibereich auf. Weiter umfasst das Dämmmaterial ein Bindemittel, mit dem nur die Verbindungsbereiche der Lederfasern miteinander verbunden sind.

Die für das Dämmmaterial erforderlichen Lederfasern können aus Lederresten durch Zerkleinern, beispielsweise Mahlen und/oder Schneiden gewonnen werden, falls die Lederreste nicht bereits als Lederfasern vorliegen. Im Falle von Falzspänen kann häufig eine Weiterverarbeitung entfallen, da die Falzspäne bereits als Fasern vorliegen. Damit ermöglicht das Dämmmaterial, Lederreste in Form von Lederfasern weiter zu nutzen und Kosten für die Entsorgung der Lederreste zu vermeiden.

Aufgrund der Verwendung von Lederfasern weist das Dämmmaterial vorteilhafterweise die geringe Brennbarkeit und die hervorragenden Wärmedämmeigenschaften von Leder auf und ist deshalb zur Wärmedämmung besonders geeignet. Insbesondere kann das Dämmmaterial eine Wärmeleitfähigkeit zwischen 0,01 W/m²K und 0,1 W/m²K, vorzugsweise zwischen 0,01 W/m²K und 0,06 W/m²K, aufweisen. Zusätzlich ermöglichen die Lederfasern, dass das Dämmmaterial atmungsaktiv, feuchtigkeitsregulierend und besonders strapazierfähig ist, weshalb das Dämmmaterial auch in rauen Umgebungen eingesetzt werden kann.

Durch die Verbindung der Lederfasern nur in den Verbindungsbereichen miteinander können sich die Freibereiche der Lederfasern in vorteilhafterweise relativ zueinander bewegen. Dadurch wird eine gute Absorbierung von Schall erreicht, weshalb sich das Dämmmaterial zur Dämmung von Schall, insbesondere von Trittschall, eignet. Insbesondere kann das Dämmmaterial für Schall in dem Frequenzbereich von 100 Hz bis 2000 Hz, vorzugsweise von 500 Hz bis 1000 Hz, einen Schallabsorptionsgrad zwischen 0,5 und 0,95 aufweisen. Auch können durch die relativ zueinander beweglichen Freibereiche unebene Untergründe oder vorhandene spitze Gegenständen in vorteilhafter Weise ausgeglichen werden, sodass eine plane Fläche resultiert.

Aufgrund dieser Vorteile eignet sich das Dämmmaterial besonders für den Einsatz in Wohn- oder Büroräumen sowie zur Außendämmung beispielsweise von Fassaden. Weitere Einsatzmöglichkeiten finden sich in der Automobil-, Boots-, Luft- und Raumfahrtbranche.

Das Dämmmaterial kann eine Dicke von mindestens 1 mm aufweisen. Insbesondere kann das Dämmmaterial eine Dicke bis zu 2 mm, 3 cm, 5 cm, 10 cm, 15 cm oder 20 cm aufweisen. Bei diesen Dicken wird vorteilhafterweise eine besonders gute Dämmwirkung erreicht.

Die Lederfasern können aus Fertigleder sein. Unter Fertigleder wird gegerbtes und zugerichtetes Leder verstanden. Die Lederfasern können eine strukturierte oder unstrukturierte Anordnung aufweisen. Die Lederfasern können alle eine gleiche Form oder voneinander unterschiedliche Formen besitzen. Vorzugsweise kann ein Verhältnis zwischen einer Länge einer Lederfaser zu einer Breite der Lederfaser mindestens 10 zu 1, 20 zu 1 oder 30 zu 1 betragen. Die Lederfasern können chromgegerbtes, chromfreies, synthetisch gegerbtes, natürlich/biologisch gegerbtes, vegetabil gegerbtes oder pflanzlich gegerbtes Leder sein.

Der Verbindungsbereich kann durch eine form- und/oder stoffschlüssige Verbindung mit dem Bindemittel definiert sein. Mindestens eine Lederfaser aus der Vielzahl von Lederfaser kann eine Mehrzahl von nicht zusammenhängenden Verbindungsbereichen aufweisen, insbesondere zwei, drei oder vier Verbindungsbereiche. Die Mehrzahl von Verbindungsbereichen ermöglichen ein Verbinden von mehreren Lederfasern mit der die Mehrzahl von Verbindungsbereichen aufweisenden Lederfaser.

Der Freibereich kann durch das Fehlen einer form- und/oder stoffschlüssigen Verbindung mit dem Bindemittel definiert sein. Der Freibereich kann größer, gleich groß und/oder kleiner als der Verbindungsbereich sein. Vorzugsweise kann ein Verhältnis zwischen Freibereich zu Verbindungsbereich mindestens 1 zu 1, 5 zu 1 oder 10 zu 1 betragen.

Das Bindemittel, das auch als Binder bezeichnet werden kann, sorgt für eine Formbeständigkeit des Dämmmaterials und kann die Lederfasern ohne Vorbindung miteinander verbinden. Das Bindemittel kann die Verbindungsbereiche aller Lederfasern miteinander verbinden oder jeweils mindestens zwei Verbindungsbereiche von mindestens zwei unterschiedlichen Lederfasern miteinander verbinden. Das Bindemittel kann die Verbindungsbereiche der Lederfasern mittels einer form- und/oder stoffschlüssigen Verbindung miteinander verbinden. Unter nur die Verbindungsbereiche miteinander verbinden kann verstanden werden, dass das Bindemittel keinen Freibereich verbinden kann. Insbesondere kann das Bindemittel nicht den Verbindungsbereich mit dem Freibereich oder die Freibereiche von mindestens zwei unterschiedlichen Lederfasern miteinander verbinden.

Das Bindemittel kann unvernetzte Harze umfassen und/oder von Zusatzstoffen frei sein. Das Bindemittel kann biologisch abbaubar sein, so dass eine biologische Abbaubarkeit des Dämmmaterials sichergestellt ist. Dadurch sind vorteilhafterweise keine Recyclingschritte erforderlich, um das Dämmmaterial in seine Bestandteile zu zerlegen. Das Bindemittel kann rieselunfähig ausgestattet sein. Vorteilhafterweise ist bei einem rieselunfähigen Bindemittel eine Fixierung des Bindemittels mit der Faser, wie beispielsweise durch eine Compoundierung, im Vorfeld überflüssig.

In einer Weiterbildung der Erfindung umfasst das Dämmmaterial eine Luftkammer, die innerhalb des Dämmmaterials angeordnet ist und die von dem Freibereich und von dem Bindemittel begrenzt ist. Vorteilhafterweise kann eine Dichte des Dämmmaterials durch eine Größe der Luftkammer eingestellt werden und damit eine Stärke der Schall- oder Wärmedämmung des Dämmmaterials bestimmt werden. Vorzugsweise kann ein Verhältnis zwischen einem Volumen der Lederfasern und des Bindemittels zu einem Volumen der Luftkammer höchstens 2 zu 1, 1 zu 1 oder 1 zu 2 betragen. Die Luftkammer kann geschlossen oder teilweise offen sein. Eine teilweise offene Luftkammer kann sich bis zu einer Außenfläche des Dämmmaterials erstrecken. Die teilweise offene Luftkammer ermöglicht vorteilhafterweise ein besseres Eindringen von Schall in das Dämmmaterial und damit eine besonders gute Schalldämmung.

In einer Weiterbildung der Erfindung weisen die Lederfasern eine quervernetzte helixförmige Kollagenstruktur auf. Vorteilhafterweise kann das Bindemittel quervernetzte helixförmigen Kollagenstrukturen besonders gut miteinander verbinden.

In einer Weiterbildung der Erfindung umfasst das Dämmmaterial mindestens ein Kaschierelement zur Verstärkung, zur Versiegelung, zur Anpassung der optischen Eigenschaften des Dämmmaterials und/oder zur Anpassung einer Eindringeigenschaft von Wasser in das Dämmmaterial. Das Kaschierelement kann an einer ersten Außenfläche oder an einer der ersten Außenfläche gegenüberliegenden zweiten Außenfläche angeordnet sein. Das Kaschierelement kann mit dem Bindemittel verbunden sein. Das Kaschierelement kann ein Gewebe zur Verstärkung, zusätzliches Bindemittel oder ein Film zur Versiegelung einer Außenfläche des Dämmmaterials, eine Dampfsperre zur Anpassung einer Eindringeigenschaft von Wasser, eine Designoberfläche in Form einer Folie zur Anpassung der optischen Eigenschaften sein. Insbesondere kann die Designoberfläche geprägt, gestanzt, gewalzt und/oder bedruckt sein.

Gemäß der Erfindung weist das Dämmmaterial einen Anteil von 40 Gewichts-% bis 95 Gewichts-%, insbesondere 70 Gewichts-% bis 80 Gewichts-%, an Lederfasern auf.

In einer Weiterbildung der Erfindung weist das Dämmmaterial einen Anteil von 5 Gewichts-% bis 60 Gewichts-%, insbesondere 20 Gewichts-% bis 30 Gewichts-%, an Bindemittel auf.

Gemäß der Erfindung ist das Bindemittel ein Polycaprolacton oder basiert auf einer Variante eines Polycaprolactons und/oder eine Basis des Bindemittels ist ein Carbonsäureester oder eine Fruchtsäure. Das Polycaprolacton, die Variante des Polycaprolactons, das Carbonsäureester und/oder die Fruchtsäure kann auf Rohöl basieren oder natürlichen Ursprungs sein.

In einer Weiterbildung der Erfindung weisen die Lederfasern eine Faserlänge von 100 µm bis 10000 µm auf. Vorteilhafterweise ist das Dämmmaterial bei kürzeren Faserlängen homogener und hat eine höhere Dichte und ist bei längeren Faserlängen stabiler und hat eine geringere Dichte. Insbesondere kann bei längeren Faserlängen die Luftkammer größer und bei kürzeren Faserlängen die Luftkammer kleiner sein.

Das erfindungsgemäße Verfahren zur Herstellung eines zuvor beschriebenen Dämmmaterials umfasst die Schritte: Mischen der Lederfasern mit dem Bindemittel zu einem Gemisch; Erhitzen des Gemisches derart, dass das Bindemittel niederviskos aufgeschmolzen wird; Verbinden von nur den Verbindungsbereichen der Lederfasern miteinander mit dem niederviskos aufgeschmolzen Bindemittel.

Das Herstellungsverfahren kann von einer Doppelbandpresse, statischen Presse, Walzmaschine oder Kalandriermaschine ausgeführt werden. Das Bindemittel kann vor dem Aufschmelzen pulverförmig sein, wobei eine Korngröße des pulverförmigen Bindemittels zwischen 0 und 1000 µm beträgt. Das Erhitzen kann abhängig von einem Schmelzpunkt oder von einer Glasübergangstemperatur des Bindemittels erfolgen. Insbesondere kann das Gemisch auf eine Temperatur erhitzt werden, die um 3 °C, um 5 °C oder um 10 °C höher ist als die Schmelztemperatur oder die Glasübergangstemperatur. Beispielsweise kann das Bindemittel Polycaprolacton mit einem Schmelzpunkt von 58 °C sein, wobei das Erhitzen auf eine Temperatur von größer 58 °C, vorzugsweise auf 61 °C erfolgt. Beispielsweise kann das Bindemittel Polyethylennaphthalat mit einer Glasübergangstemperatur von 155 °C sein, wobei das Erhitzen auf eine Temperatur von größer 155 °C, vorzugsweise auf 160 °C erfolgt. Das Verbinden kann ein Herstellen einer form- und/oder stoffschlüssigen Verbindung zwischen den Verbindungsbereichen und dem Bindemittel sein.

In einer Weiterbildung der Erfindung umfasst das Verfahren den Schritt: Abkühlen des erhitzten Gemisches unterhalb einer Glasübergangstemperatur des Bindemittels oder unterhalb eines Schmelzpunkts des Bindemittels.

In einer Weiterbildung der Erfindung umfasst das Verfahren den Schritt: Formen des Gemisches mit einem Formwerkzeug vor dem Erhitzen. Vorteilhafterweise kann das Dämmmaterial aufgrund des Formens eine lokal unterschiedliche Dichte oder Festigkeit aufweisen. Beim Formen kann gleichzeitig ein Erhitzen des Gemisches mit dem Formwerkzeug erfolgen. Das Formen kann kontinuierlich, teilkontinuierlich oder diskontinuierlich erfolgen.

In einer Weiterbildung der Erfindung umfasst das Verfahren den Schritt: wobei während dem Verbinden ein Pressen des erhitzten Gemisches erfolgt. Vorteilhafterweise kann durch das Pressen eine vorgegebene Dichte des Dämmmaterials eingestellt werden.

In einer Weiterbildung der Erfindung umfasst das Verfahren den Schritt: Einbringen eines Kaschierelements. Das Einbringen kann vor, während oder nach dem Erhitzen des Gemisches erfolgen. Insbesondere kann das Einbringen nach dem Abkühlen des erhitzten Gemisches unter lokalem Erhitzten erfolgen. Das Einbringen kann den Schritt: Thermokaschieren umfassen.

Im Folgenden wird die Erfindung anhand eines in der Zeichnung in schematischer Weise dargestellten Ausführungsbeispiels näher erläutert. Es zeigen:
- Fig. 1: ein Querschnitt eines Dämmmaterials zur Schall- oder Wärmedämmung;
- Fig. 2: ein vergrößerter Ausschnitt des Querschnitts von Fig. 1;
- Fig. 3: eine molekulare Struktur einer gegerbten Lederfaser des Dämmmaterials von Fig. 1;
- Fig. 4: ein Querschnitt einer Ausführungsform eines Dämmmaterials zur Schall- oder Wärmedämmung;
- Fig. 5: ein Querschnitt einer weiteren Ausführungsform eines Dämmmaterials zur Schall- oder Wärmedämmung;
- Fig. 6: ein Querschnitt noch einer weiteren Ausführungsform eines Dämmmaterials zur Schall- oder Wärmedämmung;
- Fig. 7: eine Ansicht einer Doppelbandpresse zur Herstellung des Dämmmaterials von Fig. 1, Fig. 4, Fig. 5 und/oder Fig. 6.

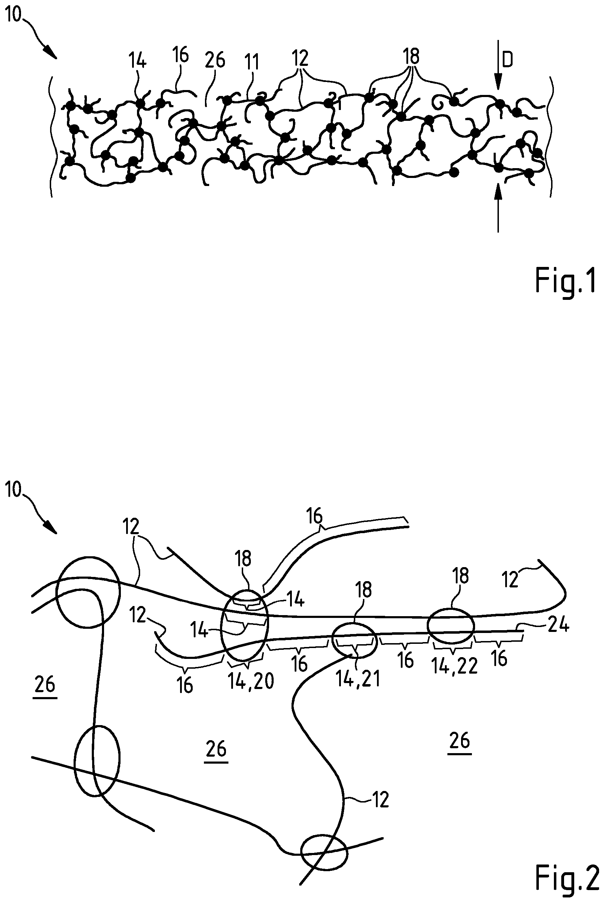

Fig. 1 zeigt ein Querschnitt eines Dämmmaterials 10 zur Schall- oder Wärmedämmung, wobei ein vergrößerter Ausschnitt des Querschnitts in Fig. 2 dargestellt ist.

Das Dämmmaterial 10 umfasst eine Vielzahl von Lederfasern 12 mit einem Anteil von 75 Gewichts-% des Dämmmaterials 10 und ein Bindemittel 18 mit einem Anteil von 25 Gewichts-% des Dämmmaterials 10. Das Dämmmaterial 10 hat eine Dicke D von 5 cm, dämmt Schall in dem Frequenzbereich von 100 Hz bis 2000 Hz mit einem Schallabsorptionsgrad von über 0,6 und verfügt über eine Wärmeleitfähigkeit von 0,035 W/m²K.

Die Lederfasern 12 bestehen aus Fertigleder. Das Fertigleder ist bei der Lederherstellung und -verarbeitung in Form von Lederresten angefallen und wurde durch Mahlen und Schneiden zu den Lederfasern 12 verarbeitet. Alle Lederfasern 12 weisen eine Länge zwischen 0,8 cm und 1 cm auf, wobei ein Verhältnis von Länge zu Breite zwischen 35 zu 1 und 40 zu 1 beträgt.

Jede Lederfaser 12 hat mindestens einen Verbindungsbereich 14 und mindestens einen Freibereich 16. In dem Verbindungsbereich 14 ist das Bindemittel 18 form- und/oder stoffschlüssig mit der Lederfaser 12 verbunden. Mit anderen Worten: Der Verbindungsbereich 14 ist durch eine form- und/oder stoffschlüssige Verbindung zwischen der Lederfaser 12 und dem Bindemittel 18 definiert. In dem Freibereich 16 ist das Bindemittel 18 nicht form- und/oder stoffschlüssig mit der Lederfaser 12 verbunden. Damit ist jede Lederfaser 12 nur bereichsweise mit dem Bindemittel 18 verbunden, nur bereichsweise in das Bindemittel 18 eingelagert und/oder nur bereichsweise in das Bindemittel 18 eingebettet.

Fig. 2 zeigt, dass das Bindemittel 18 eine Vielzahl von voneinander getrennten Bindemitteltropfen aufweist, wobei jeder Bindemitteltropfen mindestens einen Verbindungsbereich 14 einer Lederfaser 12 mit einem Verbindungsbereich 14 einer anderen Lederfaser 12 miteinander verbindet. Der Bindemitteltropfen hat die Form einer Kugel oder eines Ellipsoids.

Die in Fig. 2 mit dem Bezugszeichen 24 zusätzlich bezeichnete Lederfaser umfasst drei voneinander getrennte Verbindungsbereiche 20, 21, 22. Jeder Verbindungsbereich 20, 21, 22 weist eine form- und/oder stoffschlüssige Verbindung mit einem Bindemitteltropfen auf, der wiederum mit einem Verbindungsbereich 14 einer weiteren Lederfaser 12 verbunden ist.

Das Bindemittel 18 ist biologisch abbaubar. Infolge des biologischen Abbaus des Bindemittels 18 ist der Verbindungsbereich 14 frei zugänglich und die Lederfasern 12 können ebenfalls zersetzt und/oder biologisch abgebaut werden. Aus dem biologischen Abbau wird ein Material gewonnen, das in einem weiteren Prozessschritt nicht vorbehandelt werden muss und direkt in ein anderes Produkt umgewandelt werden kann.

Das Dämmmaterial 10 weist eine Luftkammer 26 auf, die in einem Inneren des Dämmmaterials 10 angeordnet ist. Über eine Größe der Luftkammer 26 wird eine Dichte des Dämmmaterials 10 und damit eine Stärke der Schall- oder Wärmedämmung des Dämmmaterials 10 eingestellt. Die Luftkammer 26 ist von den Freibereichen 16 und dem Bindemittel 18 begrenzt und erstreckt sich bis zu einer Außenfläche 11 des Dämmmaterials 10. Durch die teilweise offene Luftkammer 26 kann Schall in das Innere des Dämmmaterials 10 eindringen, wobei der eingedrungene Schall im Inneren von dem Dämmmaterial 10 absorbiert wird.

Weiter ist die Größe der Luftkammer 26 derart gewählt, dass sich die in der Luftkammer 26 enthaltene Luft kaum bewegen kann und deshalb nur wenig Wärmeenergie durch das Dämmmaterial 10 hindurch transportiert wird. Deshalb eignet sich das Dämmmaterial 10 besonders gut zur Wärmedämmung.

Verwendet wird das Dämmmaterial 10 insbesondere zur Dachdämmung, zur Isolierung von Rohren, Wänden oder Gehäusen, in Akustikwänden, in optischen Akustikwänden oder Bildern, in Absorberkästen oder als auflaminierter Belag auf Fliesen, Laminat oder Böden. Vor der Verwendung kann das Dämmmaterial 10 als Rollware vorliegen und beispielsweise an Wänden wie eine Tapete angebracht werden.

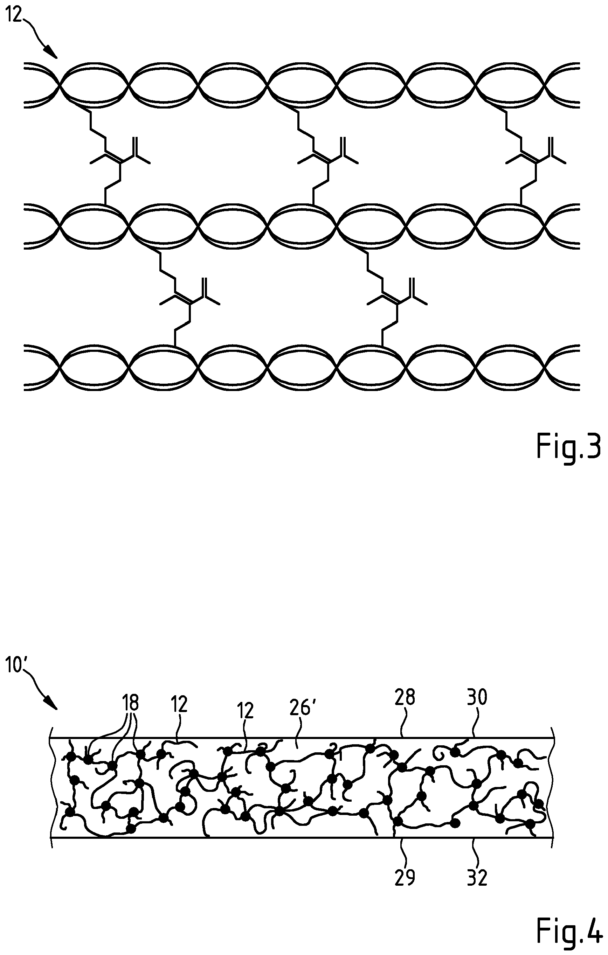

Fig. 3 zeigt eine molekulare Struktur einer gegerbten Lederfasern 12, die eine quervernetzte helixförmige Kollagenstruktur aufweist.

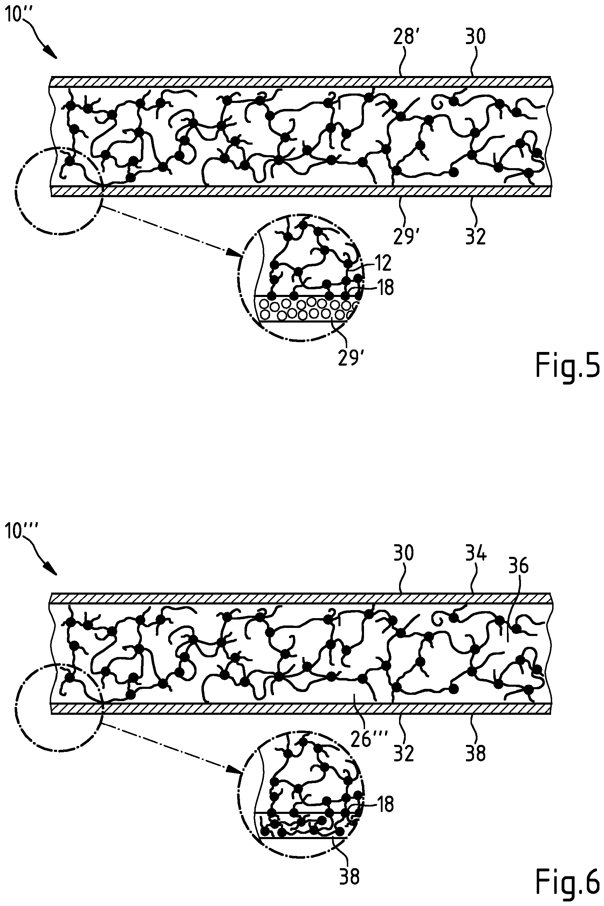

Fig. 4 zeigt eine Ausführungsform eines Dämmmaterials 10'. Soweit die in der Fig. 4 ersichtlichen Merkmale mit denjenigen der Fig. 1 bis 3 funktionell äquivalent sind, sind gleiche Bezugszeichen vergeben und die vorherigen Erläuterungen gelten entsprechend, sodass im Nachfolgenden hauptsächlich die Unterschiede erläutert werden. Dies gilt auch für die Ausführungsformen der Fig. 5 und 6.

Die Luftkammer 26' des Dämmmaterials 10' der Fig. 4 ist geschlossen und von einem ersten Kaschierelement 28 und von einem zweiten Kaschierelement 29 begrenzt. Das erste Kaschierelement 28 ist auf einer ersten Außenfläche 30 und das zweite Kaschierelement 29 ist auf einer der ersten Außenfläche 30 gegenüberliegenden zweiten Außenfläche 32 angeordnet. Das Bindemittel 18 verbindet die beiden Kaschierelemente 28, 29 mit den Lederfasern 12. Die beiden Kaschierelemente 28, 29 in Form einer dünnen bedruckten Kunststofffolie dienen zur Anpassung der optischen Eigenschaften des Dämmmaterials 10'. Zusätzlich wirkt die Kunststofffolie als Dampfsperre und verhindert ein Eindringen von Wasser in das Dämmmaterial 10'.

Fig. 5 zeigt eine weitere Ausführungsform eines Dämmmaterials 10". Das Dämmmaterial 10" der Fig. 5 weist ein erstes Kaschierelement 28' und ein zweites Kaschierelement 29' in Form eines Schaumstoffs auf. Durch den Schaumstoff reduziert sich die Wärmeleitfähigkeit des Dämmmaterials 10", wodurch die Wärmedämmung verbessert wird.

In der vergrößerten Darstellung eines Abschnitts des Dämmmaterials 10" in Fig. 5 ist die Verbindung des zweiten Kaschierelements 29' mit den Lederfasern 12 durch das Bindemittel 18 dargestellt. Das erste Kaschierelement 28' ist ebenfalls durch das Bindemittel 18 mit den Lederfasern 12 verbunden.

Fig. 6 zeigt eine weitere Ausführungsform eines Dämmmaterials 10‴. Das Dämmmaterial 10‴ der Fig. 6 umfasst drei Dämmbereiche 34, 36, 38. Der Dämmbereich 36 weist eine größere Luftkammer 26‴ und damit eine geringere Dichte als die übrigen Dämmbereiche 34, 38 auf. Deshalb sind die Dämmbereiche 34, 38 stabiler und robuster, wohingegen der Dämmbereich 36 Schall und Wärme besser dämmt. Ein derartiger Sandwichaufbau erleichtert die Handhabung und Befestigung des Dämmmaterials 10‴ bei gleichzeitig hoher Dämmwirkung von Schall und Wärme.

Die Dämmbereiche 34, 36, 38 können einzeln und getrennt voneinander hergestellt werden, wobei anschließend die Dämmbereiche 34, 36, 38 miteinander verbunden werden. Das Verbinden kann mittels des Bindemittels 18 erfolgen. Alternativ kann während der Herstellung durch lokales Erhitzen und lokales Pressen des Dämmmaterials 10‴ eine lokale höhere Dichte und damit die Dämmbereiche 34, 36, 38 erzeugt werden.

In einer nicht dargestellten Ausführungsform kann das Dämmmaterial zwei oder mehr als zwei Dämmbereiche umfassen.

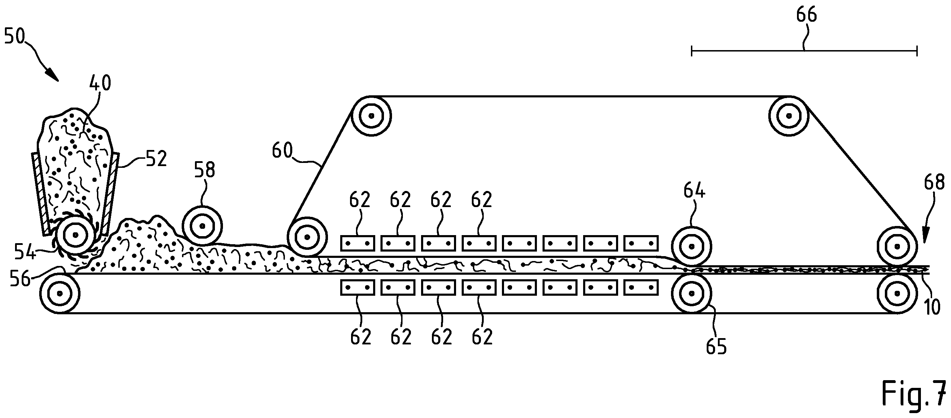

Fig. 7 zeigt eine Doppelbandpresse 50 zur Herstellung des zuvor beschriebenen Dämmmaterials 10 von Fig. 1. Hierzu werden die Lederfasern mit dem Bindemittel zu einem Gemisch 40 ohne Anbindung des Bindemittels 18 an die Lederfasern 12 vermischt und in einen Behälter 52 der Doppelbandpresse 50 gefüllt.

Mittels eines Streuelements 54 in Form einer Streuwalze wird das Gemisch 40 aus dem Behälter 52 auf ein erstes Band 56 der Doppelbandpresse 50, das aus Stahl oder aus einem mit Gewebe verstärkten PTFE gebildet ist, gestreut. Dabei bestimmt eine einstellbare Drehgeschwindigkeit der Streuwalze 54 eine Menge des Gemisches 40, die auf das erste Band 56 gestreut wird. Die Drehgeschwindigkeit der Streuwalze 54 ist derart eingestellt, dass eine vorgegebene Streudichte und/oder Streuhöhe erreicht wird.

Anschließend wird das gestreute Gemisch 40 durch einen Vorverdichter 58 in Form einer Walze vorverdichtet. Die Vorverdichtung erleichtert einen Temperatureintrag in das Gemisch 40.

Die Doppelbandpresse 50 weist ein zweites Band 60 aus Stahl oder mit Gewebe verstärktes PTFE auf, welches dem ersten Band 56 gegenüberliegend angeordnet ist. Ein Abstand zwischen dem ersten und zweiten Band 56, 60 ist einstellbar. Ein geringer Abstand führt zu einem hohen Druck auf das Gemisch 40, wohingegen ein großer Abstand zu einem geringen Druck auf das Gemisch 40 führt.

Der Abstand zwischen dem ersten und zweiten Band 56, 60 in Kombination mit der Drehgeschwindigkeit der Streuwalze 54 bestimmen die Dämmwirkung des hergestellten Dämmmaterials 10. Bei niedriger Drehgeschwindigkeit der Streuwalze 54 und großem Abstand zwischen dem ersten und zweiten Band 56, 60 weist das hergestellte Dämmmaterial 10 eine große Luftkammer 26 und damit eine geringe Dichte und hohe Dämmwirkung auf. Bei hoher Drehgeschwindigkeit der Streuwalze 54 und geringem Abstand zwischen dem ersten und zweiten Band 56, 60 weist das hergestellte Dämmmaterial 10 eine kleine Luftkammer 26 und damit eine hohe Dichte und geringe Dämmwirkung auf.

Weiter umfasst die Doppelbandpresse 50 eine Heizeinrichtung 62 mit mehreren Heizelementen, welche das erste und zweite Band 56, 60 und das dazwischen angeordnete Gemisch 40 erhitzen. Mit der Heizeinrichtung 62 wird das Gemisch 40 derart erhitzt, dass das Bindemittel 18 niederviskos aufgeschmolzen wird. In der Ausführungsform der Fig. 7 umfasst das Bindemittel 18 Polycaprolacton mit einem Schmelzpunkt von 58 °C, weshalb das Gemisch 40 auf eine Temperatur von 61 °C erhitzt wird. Infolge des Erhitzens und des Drucks zwischen den beiden Bändern 56, 60 werden nur die Verbindungsbereiche 20 der Lederfasern 12 durch das niederviskos aufgeschmolzene Bindemittel miteinander verbunden.

Während dem Verbinden erfolgt zusätzlich ein Pressen des erhitzten Gemisches 40 mit einer ersten Presswalze 64 und einer zweiten Presswalze 65 der Doppelbandpresse 50. Durch das Pressen mit den beiden Presswalzen 64, 65 beschleunigt sich der Verbindungsvorgang. Nach dem Verbinden sind die Lederfasern 12 nur teilweise mit dem Bindemittel 18 ummantelt.

Anschließend erfolgt ein Abkühlen des erhitzten Gemisches 40 unterhalb des Schmelzpunkts des Bindemittels von 58 °C zum Fixieren des verbundenen Zustands. Das Abkühlen erfolgt in einer Abkühlzone 66 der Doppelbandpresse 50, die sich von den beiden Presswalzen 64, 65 bis zu einem Ende 68 der Doppelbandpresse 50 erstreckt. Während dem Abkühlen wird der Druck, der durch die beiden Bänder 56,60 auf das abzukühlende Gemisch 40 wirkt, konstant gehalten. In einer nicht gezeigten Ausführungsform kann die Doppelbandpresse eine Kühleinrichtung aufweisen, welche den beiden Bändern Wärmeenergie entzieht, um das Abkühlen des erhitzten Gemisches zu beschleunigen.

Damit ermöglicht die Doppelbandpresse 50 eine kontinuierliche Produktion des Dämmmaterials 10. Das Dämmmaterial 10 kann nach dem Verlassen der Doppelbandpresse 50 als Rollenware auf eine Rolle aufgerollt werden oder in einzelne Platten geschnitten werden.

In einem nachgelagerten Verfahrensschritt können an der Außenfläche des Dämmmaterials 10 Elemente angebracht werden, um eine Oberfläche des Dämmmaterials 10 zu vergrößern und damit die Schalldämmung nochmals zu verbessern. Zusätzlich oder alternativ kann die Dämmereigenschaft des Dämmmaterials 10 in einem nachgelagerten Verfahrensschritt durch Einwirkung von Wärme und Druck und damit durch Verändern von Dichte und Dicke des Dämmmaterials 10 eingestellt werden.

In einem nicht gezeigten Verfahrensschritt kann ein Kaschierelement eingebracht werden. Hierzu wird dem Gemisch vor einem Kontakt mit dem zweiten Band das Kaschierelement zugeführt. Das Kaschierelement kann ein Vlies, ein Schaum, ein Verstärkungsgitter oder eine Dampfsperre sein. Anschließend kann das Kaschierelement durch den Druck der beiden Bänder und Hitze der Heizeinrichtung mit dem Bindemittel verbunden werden.

In einem weiteren nicht gezeigten, insbesondere statischen, Verfahrensschritt, kann nach dem Erhitzen, insbesondere nach dem Verbinden, ein Prägen des Gemisches mit einem Prägewerkzeug erfolgen. Das Prägewerkzeug kann eine beheizte und strukturierte Prägewalze sein. Das Prägewerkzeug kann von der Doppelbandpresse getrennt ausgebildet sein. Alternativ kann die Doppelbandpresse das Prägewerkzeug aufweisen. Durch das Prägen können Muster in das Dämmmaterial eingebracht oder eine lokal erhöhte Dichte erzeugt werden.

## Patentansprüche

1. Dämmmaterial (10) insbesondere zur Schall- und/oder Wärmedämmung, umfassend
- eine Vielzahl von Lederfasern (12), vorzugsweise aus Fertigleder,
- wobei jede Lederfaser (12) einen Verbindungsbereich (14) und einen Freibereich (16) aufweist,
- ein Bindemittel (18), mit dem nur die Verbindungsbereiche (14) der Lederfasern (12) miteinander verbunden sind, **dadurch gekennzeichnet, dass**
- das Dämmmaterial (10) einen Anteil von 40 Gewichts-% bis 95 Gewichts-% an Lederfasern (12) aufweist,
- wobei das Bindemittel (18) ein Polycaprolacton ist oder auf einer Variante eines Polycaprolactons basiert und/oder wobei eine Basis des Bindemittels ein Carbonsäureester oder eine Fruchtsäure ist.

2. Dämmmaterial (10) nach Anspruch 1, umfassend
- eine Luftkammer (26), die innerhalb des Dämmmaterials (10) angeordnet ist und die von dem Freibereich (16) und dem Bindemittel (18) begrenzt ist.

3. Dämmmaterial (10) nach Anspruch 1 oder 2,
- wobei die Lederfasern (12) eine quervernetzte helixförmige Kollagenstruktur aufweisen.

4. Dämmmaterial (10) nach einem der vorhergehenden Ansprüche, umfassend
- ein Kaschierelement (28, 29, 28', 29') zur Verstärkung, zur Versiegelung, zur Anpassung der optischen Eigenschaften des Dämmmaterials (10) und/oder zur Anpassung einer Eindringeigenschaft von Wasser in das Dämmmaterial (10).

5. Dämmmaterial (10) nach einem der vorhergehenden Ansprüche,
- wobei das Dämmmaterial (10) einen Anteil von 5 Gewichts-% bis 60 Gewichts-% an Bindemittel (18) aufweist.

6. Dämmmaterial (10) nach einem der vorhergehenden Ansprüche,
- wobei die Lederfasern (12) eine Faserlänge von 100 µm bis 10000 µm aufweisen.

7. Verfahren zur Herstellung eines Dämmmaterials (10) umfassend eine Vielzahl von Lederfasern (12), vorzugsweise aus Fertigleder, wobei jede Lederfaser (12) einen Verbindungsbereich (14) und einen Freibereich (16) aufweist, und ein Bindemittel (18), mit dem nur die Verbindungsbereiche (14) der Lederfasern (12) miteinander verbunden sind, wobei das Dämmmaterial (10) einen Anteil von 40 Gewichts-% bis 95 Gewichts-% an Lederfasern (12) aufweist, wobei das Bindemittel (18) ein Polycaprolacton ist oder auf einer Variante eines Polycaprolactons basiert und/oder wobei eine Basis des Bindemittels ein Carbonsäureester oder eine Fruchtsäure ist, mit den Schritten
- Mischen der Lederfasern (12) mit dem Bindemittel (18) zu einem Gemisch (40),
- Erhitzen des Gemisches (40) derart, dass das Bindemittel (18) niederviskos aufgeschmolzen wird,
- Verbinden von nur den Verbindungsbereichen (14) der Lederfasern (12) miteinander mittels des niederviskos aufgeschmolzenen Bindemittels (18), wobei eine Doppelbandpresse (50) zur Herstellung des Dämmmaterials (10) eingesetzt wird, wobei das Gemisch (40) mittels eines Streuelements (54) in Form einer Streuwalze auf ein umlaufendes erstes Band (56) der Doppelbandpresse (50) gestreut wird und anschließend das gestreute Gemisch (40) durch einen Vorverdichter (58) in Form einer Walze vorverdichtet wird, und wobei ein zweites Band (60) der Doppelbandpresse (50) dem ersten Band (56) gegenüberliegend angeordnet ist und ein Abstand zwischen dem ersten und zweiten Band (56, 60) eingestellt wird, wobei die Bänder (56,60) aus Stahl oder aus einem mit Gewebe verstärkten PTFE gebildet sind.

8. Verfahren nach Anspruch 7, umfassend
- eine Luftkammer (26), die innerhalb des Dämmmaterials (10) angeordnet ist und die von dem Freibereich (16) und dem Bindemittel (18) begrenzt ist.

9. Verfahren nach Anspruch 7 oder 8,
- wobei die Lederfasern (12) eine quervernetzte helixförmige Kollagenstruktur aufweisen.

10. Verfahren nach einem der Ansprüche 7 bis 9,
- wobei das Dämmmaterial (10) einen Anteil von 5 Gewichts-% bis 60 Gewichts-% an Bindemittel (18) aufweist.

11. Verfahren nach einem der Ansprüche 7 bis 10,
- wobei die Lederfasern (12) eine Faserlänge von 100 µm bis 10000 µm aufweisen.

12. Verfahren nach einem der Ansprüche 7 bis 11, mit dem Schritt
- Abkühlen des erhitzten Gemisches (40) unterhalb einer Glasübergangstemperatur des Bindemittels (18) oder unterhalb eines Schmelzpunkts des Bindemittels (18).

13. Verfahren nach einem der Ansprüche 7 bis 12, mit dem Schritt
- wobei während dem Verbinden ein Pressen des erhitzten Gemisches (40) erfolgt.

14. Verfahren nach einem der Ansprüche 7 bis 13, mit dem Schritt
- Einbringen eines Kaschierelements (28, 29, 28', 29').

## Claims

1. Insulating material (10), in particular for sound and/or thermal insulation, comprising
- a plurality of leather fibers (12), preferably made of finished leather,
- wherein each leather fiber (12) has a connecting region (14) and a free region (16),
- a binding agent (18), by means of which only the connecting regions (14) of the leather fibers (12) are connected to one another, **characterized in that**
- the insulating material (10) has a proportion of 40 wt.% to 95 wt.% of leather fibers (12),
- wherein the binding agent (18) is a polycaprolactone or is based on a variant of a polycaprolactone and/or wherein a base of the binding agent is a carboxylic acid ester or a fruit acid.

2. Insulating material (10) according to claim 1, comprising
- an air chamber (26) which is arranged within the insulating material (10) and which is delimited by the free region (16) and the binding agent (18).

3. Insulating material (10) according to claim 1 or 2,
- wherein the leather fibers (12) have a cross-linked helical collagen structure.

4. Insulating material (10) according to any of the preceding claims, comprising
- a laminating element (28, 29, 28', 29') for reinforcement, sealing, adjusting the visual properties of the insulating material (10) and/or adjusting the property relating to the penetration of water into the insulating material (10).

5. Insulating material (10) according to any of the preceding claims,
- wherein the insulating material (10) has a proportion of 5 wt.% to 60 wt.% of binding agent (18).

6. Insulating material (10) according to any of the preceding claims,
- wherein the leather fibers (12) have a fiber length of 100 µm to 10,000 µm.

7. Method for producing an insulating material (10) comprising a plurality of leather fibers (12), preferably made of finished leather, wherein each leather fiber (12) has a connecting region (14) and a free region (16), and a binding agent (18), by means of which only the connecting regions (14) of the leather fibers (12) are connected to one another, wherein the insulating material (10) has a proportion of 40 wt.% to 95 wt.% of leather fibers (12), wherein the binding agent (18) is a polycaprolactone or is based on a variant of a polycaprolactone and/or wherein a base of the binding agent is a carboxylic acid ester or a fruit acid, the method comprising the steps of
- mixing the leather fibers (12) with the binding agent (18) to form a mixture (40),
- heating the mixture (40) such that the binding agent (18) is melted to a low viscosity,
- connecting only the connecting regions (14) of the leather fibers (12) to one another by means of the binding agent (18) melted to a low viscosity, wherein a double-belt press (50) is used to produce the insulating material (10), wherein the mixture (40) is spread by means of a spreading element (54) in the form of a spreading roller onto a rotating first belt (56) of the double-belt press (50) and then the spread mixture (40) is pre-compacted by a pre-compactor (58) in the form of a roller, and wherein a second belt (60) of the double-belt press (50) is arranged opposite the first belt (56) and a distance between the first and second belts (56, 60) is adjusted, wherein the belts (56, 60) are made of steel or of a fabric-reinforced PTFE.

8. Method according to claim 7, comprising
- an air chamber (26) which is arranged within the insulating material (10) and which is delimited by the free region (16) and the binding agent (18).

9. Method according to claim 7 or 8,
- wherein the leather fibers (12) have a cross-linked helical collagen structure.

10. Method according to any of claims 7 to 9,
- wherein the insulating material (10) has a proportion of 5 wt.% to 60 wt.% of binding agent (18).

11. Method according to any of claims 7 to 10,
- wherein the leather fibers (12) have a fiber length of 100 µm to 10,000 µm.

12. Method according to any of claims 7 to 11, comprising the step of
- cooling the heated mixture (40) below a glass transition temperature of the binding agent (18) or below a melting point of the binding agent (18).

13. Method according to any of claims 7 to 12, comprising the step
- wherein the heated mixture (40) is pressed during the connection process.

14. Method according to any of claims 7 to 13, comprising the step of
- inserting a laminating element (28, 29, 28', 29').

## Revendications

1. Matériau isolant (10), en particulier pour l'isolation acoustique et/ou thermique, comprenant
- une pluralité de fibres de cuir (12), de préférence en cuir fini,
- chaque fibre de cuir (12) présentant une zone de liaison (14) et une zone libre (16),
- un liant (18) reliant entre elles uniquement les zones de liaison (14) des fibres de cuir (12), **caractérisé en ce que**
- le matériau isolant (10) présente une proportion de 40 % en poids à 95 % en poids de fibres de cuir (12),
- le liant (18) étant une polycaprolactone ou étant basé sur une variante d'une polycaprolactone et/ou une base du liant étant un ester d'acide carboxylique ou un acide de fruit.

2. Matériau isolant (10) selon la revendication 1, comprenant
- une chambre à air (26) qui est disposée à l'intérieur du matériau isolant (10) et qui est délimitée par la zone libre (16) et le liant (18).

3. Matériau isolant (10) selon la revendication 1 ou 2,
- les fibres de cuir (12) présentant une structure de collagène hélicoïdale réticulée.

4. Matériau isolant (10) selon l'une des revendications précédentes, comprenant
- un élément de contrecollage (28, 29, 28', 29') destiné à renforcer, à sceller, à adapter les propriétés optiques du matériau isolant (10) et/ou à adapter une propriété de pénétration de l'eau dans le matériau isolant (10).

5. Matériau isolant (10) selon l'une des revendications précédentes,
- le matériau isolant (10) présentant une proportion de 5 % en poids à 60 % en poids de liant (18).

6. Matériau isolant (10) selon l'une des revendications précédentes,
- les fibres de cuir (12) présentant une longueur de fibre de 100 µm à 10 000 µm.

7. Procédé pour la fabrication d'un matériau isolant (10) comprenant une pluralité de fibres de cuir (12), de préférence en cuir fini, chaque fibre de cuir (12) présentant une zone de liaison (14) et une zone libre (16), et un liant (18) reliant entre elles uniquement les zones de liaison (14) des fibres de cuir (12), le matériau isolant (10) présentant une proportion de 40 % en poids à 95 % en poids de fibres de cuir (12), le liant (18) étant une polycaprolactone ou étant basé sur une variante d'une polycaprolactone et/ou une base du liant étant un ester d'acide carboxylique ou un acide de fruit, comportant les étapes consistant à
- mélanger les fibres de cuir (12) avec le liant (18) pour former un mélange (40),
- chauffer le mélange (40) de telle sorte que le liant (18) est fondu à faible viscosité,
- relier entre elles uniquement les zones de liaison (14) des fibres de cuir (12) à l'aide du liant (18) fondu à faible viscosité, une presse à double bande (50) étant utilisée pour la fabrication du matériau isolant (10), le mélange (40) étant dispersé au à l'aide d'un élément de dispersion (54) sous la forme d'un rouleau de dispersion sur une première bande (56) circulante de la presse à double bande (50) et le mélange (40) dispersé étant ensuite précomprimé par un précompresseur (58) sous la forme d'un rouleau et une deuxième bande (60) de la presse à double bande (50) étant disposée à l'opposé de la première bande (56) et une distance entre la première et la deuxième bande (56, 60) étant réglée, les bandes (56, 60) étant en acier ou en un PTFE renforcé par du tissu.

8. Procédé selon la revendication 7, comprenant
- une chambre à air (26) qui est disposée à l'intérieur du matériau isolant (10) et qui est délimitée par la zone libre (16) et le liant (18).

9. Procédé selon la revendication 7 ou 8,
- les fibres de cuir (12) présentant une structure de collagène hélicoïdale réticulée.

10. Procédé selon l'une des revendications 7 à 9,
- le matériau isolant (10) présentant une proportion de 5 % en poids à 60 % en poids de liant (18).

11. Procédé selon l'une des revendications 7 à 10,
- les fibres de cuir (12) présentant une longueur de fibre de 100 µm à 10 000 µm.

12. Procédé selon l'une des revendications 7 à 11, comportant l'étape consistant à
- refroidir le mélange (40) chauffé en dessous d'une température de transition vitreuse du liant (18) ou en dessous d'un point de fusion du liant (18).

13. Procédé selon l'une des revendications 7 à 12, comportant l'étape consistant à
- une compression du mélange (40) chauffé étant effectuée pendant la liaison.

14. Procédé selon l'une des revendications 7 à 13, comportant l'étape consistant à
- introduire un élément de contrecollage (28, 29, 28', 29').
